# EUROPÄISCHE PATENTSCHRIFT

(11) **EP 4 351 984 B1**
(45) Veröffentlichungstag und Bekanntmachung des Hinweises auf die Patenterteilung: **28.05.2025**
(21) Anmeldenummer: 22733918.1
(22) Anmeldetag: 08.06.2022
(51) Int. Cl.: B65D 65/46, B65D 85/804, B65D 6/00, A45D 40/00, C08L 1/02, C09D 101/02, C09D 105/12, C09D 191/00, C09D 191/06, C09D 199/00, D21H 19/18, D21H 19/34, D21H 19/52, D21H 19/54, D21H 19/82, D21H 27/10, D21J 3/10

(54) **FORMKÖRPER MIT ANSCHLUSSELEMENT**
MOULDED BODY WITH CONNECTING ELEMENT
CORPS MOULÉ AVEC ÉLÉMENT DE LIAISON

(30) Priorität: 08.06.2021 DE 102021114725; 14.02.2022 DE 102022103327
(43) Veröffentlichungstag der Anmeldung: 17.04.2024
(73) Patentinhaber: PAPACKS SALES GmbH, 50829 Köln (DE)
(72) Erfinder: DAG, Tahsin, 50829 Köln (DE)
(74) Vertreter: Freischem & Partner Patentanwälte mbB
(86) Internationale Anmeldenummer: PCT/EP2022/065588
(87) Internationale Veröffentlichungsnummer: WO 2022/258707

(56) Entgegenhaltungen:
- WO-A1-2020/216719
- US-A1- 2010 252 617
- US-B2- 8 663 419

## Beschreibung

Die Erfindung betrifft einen Formkörper aus Faserstoff mit einem Anschlusselement.

Sie bezieht sich insbesondere auf ein Behältnis mit einem mindestens eine Öffnung aufweisenden Behälter aus Faserstoff und einer Abdeckung für die Öffnung, wobei der Behälter eine biologisch abbaubare oder bioinerte Beschichtung aufweist, wobei ein spritzgegossenes Anschlusselement zumindest den Bereich der Öffnung lokal verstärkt. Die Problematik der festen Verbindung eines Anschlusselements mit einem Formkörper aus Faserstoff ist aber nicht auf den Anwendungsfall der lokalen Verstärkung einer Behälteröffnung beschränkt.

Aus EP 2 573 008 B1 ist ein Behälter, insbesondere eine Kaffeekapsel, bekannt, der aus einem Papiermaterial gebildet ist und an einem offenen Ende einen Flansch aufweist. An dem Flansch ist ein sich radial über den Flansch hinaus erstreckender Verstärkungsring angeordnet, der mit einer Abdeckung geklebt oder geschweißt werden kann. Der Verstärkungsring ist insbesondere aus Papier oder/und einem anderem Material hergestellt, welches wenigstens ein Harz oder Gummi enthält.

Aus DE 10 2019 101 545 A1 ist ein Behältnis, insbesondere eine Kaffeekapsel, mit einem becherförmigen Behälter aus Faserstoff bekannt, welcher mittels einer als Deckel bezeichneten Abdeckung verschließbar ist. Der Behälter weist an einer Öffnung einen als ringförmigen Umfangsrand bezeichneten Flansch auf. Der Flansch ist von einem Verstärkungsring umgriffen, welcher insbesondere aus einem unbeschichteten Kartonagenwerkstoff hergestellt ist.

Aus FR 2 741 042 A1 ist ein Behältnis zur Aufnahme eines kosmetischen Produktes bekannt. Das Behältnis weist einen becherförmigen Behälter und ein spritzgegossenes äußeres Gehäuse auf. Der Behälter kann insbesondere aus Polypropylen oder einem anderen geeigneten Material bestehen, das nicht chemisch mit dem Inhalt des Behälters reagiert. Das Gehäuse kann insbesondere aus Plexiglas oder einem anderen Material hergestellt sein, das einen ästhetischen Eindruck mit den erforderlichen technischen Eigenschaften eines Gehäuses verbindet.

Die Druckschrift US 2010/0252617 A1 beschreibt eine aus Papierpulpe gefertigte Flasche aus Faserstoff mit einem zylindermantelförmigen Halsabschnitt, wobei in oder auf den Halsabschnitt eine ebenfalls zylindermantelförmige Verbindungswandung eines Anschlusselements eingesteckt oder aufgesteckt ist. Das Anschlusselement hat einen Gewindeabschnitt zum Aufschrauben eines Schraubdeckels. Die Druckschrift US 8 663 419 B2 beschreibt ebenfalls eine aus Pulpe gefertigte Flasche aus Faserstoff mit einem Anschlusselement, dass sowohl eine axial verlaufende Zylinderwandung als auch einen sich daran anschließenden und radial verlaufenden Haltering aufweist, die beide innerhalb der Hülle der Flasche aus Faserstoff verlaufen und dagegen anliegen.

Die aus dem Stand der Technik bekannten Behältnisse sind entweder nicht ausschließlich aus biologisch abbaubaren Bestandteilen gebildet, oder sie weisen eine vergleichsweise geringe mechanische Stabilität auf.

Die Aufgabe der Erfindung ist es, einen Formkörper aus Faserstoff mit einem Anschlusselement zuverlässig und dauerhaft zu verbinden. Dies kann dem Zweck dienen, ein Behältnis bereitzustellen, das ausschließlich aus biologisch abbaubaren Bestandteilen gebildet ist, das eine hohe Gasdichtigkeit und eine hohe mechanische Stabilität aufweist und dessen Herstellung besonders flexibel und kostengünstig ist. Die hier beschriebene Technologie ist aber auch für jeden anderen Formkörper aus Faserstoff vorteilhaft, der mit einem beliebigen Anschlusselement zu verbinden ist.

Die Aufgabe wird dadurch gelöst, dass das Anschlusselement eine Verbindungswand mit Durchbrüchen aufweist, welche von dem Faserstoff des Formkörpers durchragt werden.

Das Anschlusselement kann also eine dünne Verbindungswand aufweisen, in der mehrere Durchbrüche angeordnet sind. Die Durchbrüche sind vorzugsweise regelmäßig über die Fläche der Verbindungswand verteilt. Insbesondere kann die Verbindungswand gitterförmig ausgebildet sein, so dass die Fläche der Durchbrüche etwa gleich groß ist wie oder größer ist als die Fläche der zwischen den Durchbrüchen verbleibenden Stege. Das Anschlusselement kann in eine Saugform eingelegt werden, in der der Formkörper aus Faserstoff geformt wird. Die Saugform wird in eine Pulpe, das heißt in eine Mischung von Faserstoff mit Wasser, eingetaucht. Durch eine poröse Wand der Saugform wird das Wasser angesogen, wobei sich das Fasermaterial in einer Schicht auf der Oberfläche der Saugform ablagert. Die Verbindungswand mit Durchbrüchen wird bei diesem Vorgang in einem geringen Abstand von z.B. 1 mm zu der porösen Wand der Saugform gehalten. Im Bereich der Verbindungswand des Anschlusselements mit Durchbrüchen lagert sich der Faserstoff um die Verbindungswand herum ab und durchragt die Durchbrüche, so dass das Anschlusselement fest in der entstehenden Faserstoffschicht verankert wird, die den Formkörper bildet. Der angesaugte Faserstoff kann gepresst werden, so dass die gebildete Faserstoffschicht mit dem eingeformten Abschnitt des Anschlusselements entwässert wird.

Das Anschlusselement kann eine beliebige Form aufweisen und eine beliebige Funktion erfüllen. Es kann aus beliebigen, festen Materialien wie Holz oder Leichtmetall gebildet sein, insbesondere aber aus einem biologisch abbaubaren Kunststoff. Zur Verankerung in der Faserstoffschicht des Faserstoff-Formkörpers weist das Anschlusselement einen Abschnitt auf, der als dünne Verbindungswand mit Durchbrüchen ausgebildet ist. Die Verbindungswand kann auf die oben beschriebene Weise in eine Faserstoffschicht des Faserstoff-Formkörpers eingebettet werden.

Wie eingangs erwähnt, wurde der Formkörper aus Faserstoff ausgehend von einem Behältnis entwickelt. Das Behältnis weist einen mindestens eine Öffnung aufweisenden Behälter aus Faserstoff und eine Abdeckung für die Öffnung auf, wobei der Behälter der erfindungsgemäße Faserstoff-Formkörper sein kann und eine biologisch abbaubare Beschichtung aufweisen kann. Alternativ oder zusätzlich kann der Behälter eine bioinerte Beschichtung, insbesondere eine SiO₂-Beschichtung aufweisen, die im Sol-Gel-Prozess auf der Innenseite des Behälters abgelagert wird. Falls der Formkörper aus Faserstoff keine dichtende Funktion hat, kann auf die Beschichtung verzichtet werden.

Der Förmkörper, d.h. der Behälter, aus Faserstoff, kann, wie oben beschrieben, aus einer wässrigen Pulpe mit Cellulosefasern hergestellt werden. Die Cellulosefasern werden bspw. durch ein einfaches Schöpfverfahren mittels einer Saugform in eine Form gebracht, welche den Formkörper bildet. Dabei wird das Wasser durch Poren in der Saugform abgesaugt und die Cellulosefasern lagern sich auf der mit den Poren versehenen Oberfläche der Saugform ab. Beim Transferverfahren wird der durch die Saugform gebildete Formkörper einer Transferform übergeben, so dass er von beiden Seiten geformt wird. Es können zusätzliche thermische Bearbeitungsverfahren und Pressverfahren zum Einsatz kommen, welche die Oberflächenqualität des Formkörpers erhöhen. Der so gebildete Formkörper aus Faserstoff ist fest und formstabil.

Der auf diese Weise hergestellte Behälter aus Faserstoff kann eine Öffnung, einen der Öffnung gegenüberliegenden Boden, und eine die Öffnung und den Boden umfassende Umfangswand aufweisen. Die Öffnung und der Boden können beispielsweise rund, oval oder polygonal sein. An der Öffnung des Behälters ist eine Abdeckung angebracht oder anbringbar, durch welche die Öffnung des Behälters verschlossen bzw. verschließbar ist. Die Abdeckung wirkt derart mit dem Behälter zusammen, dass der Innenraum des Behälters gegenüber der Umgebung geschlossen bzw. schließbar ist. Die Abdeckung kann ebenfalls biologisch abbaubar sein.

Faserstoff ohne eine Beschichtung weist eine gewisse Gas- und Wasserdurchlässigkeit auf. Dies kann bei bestimmten Anwendungsfällen eines Formkörpers erwünscht oder zumindest nicht nachteilig sein. Eine hier beschriebene Ausführungsform eines Behälters aus Faserstoff weist eine biologisch abbaubare Beschichtung auf, so dass seine Gas- und Wasserdichtigkeit erhöht ist, insbesondere wenn die Abdeckung mit dem Behälter zusammenwirkt. Das Beschichten von Faserstoff ist grundsätzlich aus dem Stand der Technik bekannt. Beschichtungen können beispielsweise aufgesprüht werden. Alternativ oder zusätzlich kann eine Beschichtung durch Eintauchen eines Faserstoffs in ein Beschichtungsbad und anschließendes trocknen erfolgen. Zum Beispiel offenbart die Druckschrift WO 2020/216719 A1 der Anmelderin eine biologisch abbaubare Barriereschicht für ein Cellulosesubstrat, die sich zur Beschichtung der hier beschriebenen Faserstoffbehälter gut eignet.

An dem Behälter kann das Anschlusselement angeordnet sein, welches den Behälter zumindest im Bereich der Öffnung lokal verstärken kann. Der Behälter und das Anschlusselement können somit ein Behältnis bilden, das zumindest im Bereich der Öffnung lokal verstärkt ist. Das Anschlusselement kann spritzgegossen und/oder aus biologisch abbaubarem Material gebildet sein.

Mit anderen Worten kann ein im Spritzgießverfahren hergestelltes Anschlusselement verwendet werden, das derart mit dem Behälter zusammenwirkt, dass der Behälter zumindest im Bereich der Öffnung besonders steif und formstabil ist. Zu diesem Zweck weist das Material des Anschlusselements eine höhere Festigkeit auf als der Faserstoff, aus dem der Behälter gebildet ist. Das Behältnis kann somit insgesamt höhere mechanische Beanspruchungen aufnehmen als der Behälter ohne ein derartiges Anschlusselement. Da das Anschlusselement aus einem biologisch abbaubaren Material gefertigt sein kann, kann das Behältnis ausschließlich aus biologisch abbaubaren Materialien bestehen. Biologisch abbaubar bedeutet, dass die Materialien unter bestimmten anaeroben oder aeroben Bedingungen zersetzt werden können. Das biologisch abbaubare Material des Anschlusselements kann ferner spritzgießbar sein. Es kann hierfür insbesondere thermoplastisch sein. Damit ist gemeint, dass das Material, aus dem das Anschlusselement gebildet ist, in einem erwärmten Zustand fließfähig ist und erstarrt, wenn es abkühlt. Eine derartige Konsistenzänderung ist bei thermoplastischen Materialien reversibel. Alternativ ist es auch möglich, dass das spritzgießbare Material nur während der Verarbeitung fließfähig ist und in dem spritzgegossenen Zustand in der Art von Duromeren oder Elastomeren irreversibel aushärtet. Es wird explizit darauf hingewiesen, dass das spritzgießbare Material des Anschlusselements zusätzlich oder alternativ auch druckbar, insbesondere 3D-druckbar, und/oder mehrteilig ausgebildet sein kann. Dadurch, dass das Material des Anschlusselements spritzgießbar und/oder druckbar ist, können verschiedene Geometrien kostengünstig mit einer einzigen Produktionsanlage und notwendigenfalls angepassten Werkzeugen hergestellt werden, wodurch die Herstellung des Anschlusselements besonders flexibel und kostengünstig ist.

In der Praxis eignet sich z.B. eine thermoplastisch verarbeitbare Stärke zur Bildung des Anschlusselements, wie sie in den Druckschriften EP 0 118 240 A2 oder EP 0 397 819 B1 beschrieben ist.

Wenn das Anschlusselement mehrteilig ist, können verschiedene Teile gemäß einem Baukastenprinzip zu unterschiedlichen Anschlusselementen zusammengesetzt werden, wodurch die Flexibilität und Kosteneffizienz der Herstellung steigt. Insbesondere, wenn das Anschlusselement spritzgegossen ist, ist eine hohe Oberflächengüte des Anschlusselements erzielbar und gut reproduzierbar.

Das Anschlusselement kann aber auch aus anderen Materialien als spritzgießbaren Materialien bestehen. Durch die vorgeschlagene Verbindungswand mit Durchbrüchen, welche von dem abgelagerten Faserstoff, der den Formkörper bildet, durchragt werden, wird das Anschlusselement fest in der entstehenden Faserstoffschicht verankert und kann beliebige Funktionen erfüllen.

In der Praxis kann die Beschichtung des Formkörpers, insbesondere des Behälters, eine Grundierung sein, die mindestens einen der folgenden Bestandteile enthält:
- Cellulosefasern,
- Kasein,
- Molke,
- Agar Agar,
- Flohsamenschalen
- SiO₂.

Die Grundierung kann auf die in den Innenraum weisende Oberfläche (die Innenseite) des Behälters aufgebracht sein. Zusätzlich oder alternativ kann die Grundierung auf die nach außen weisende Oberfläche (die Außenseite) des Behälters aufgebracht sein. Wie oben erwähnt, erhöht die Beschichtung die Gasdichtigkeit des Behälters. Zusätzlich kann dadurch auch dessen Festigkeit gesteigert werden.

Cellulose-Nanofibrillen oder -Mikrofibrillen können beispielsweise in Wasser gelöst sein und auf den Behälter aufsprühbar sein. Nanocellulose weist Cellulose-Microfibrillen mit einem Durchmesser im Median in einem Bereich von 30 bis 100 nm und/oder Cellulose-Nanofibrillen mit einem Durchmesser im Median in einem Bereich von 5 bis 20 nm auf. Dabei sind industriell vertriebene Cellulose-Fibrillen oft ein Gemisch von Microfibrillen und Nanofibrillen. In der Praxis hat sich eine Mischung von 2 Gew.-% Nanocellulose in 98 Gew.-% Wasser für die Grundierung bewährt. Wenn ein höherer Celluloseanteil gewählt wird, kann eine Verformung des Behälters durch die Feuchtigkeit reduziert oder vermieden und die Trocknungszeit der Grundierung verkürzt werden. In der Praxis ist ein Celluloseanteil der Grundierungslösung von 2 bis 10 Gew.-% geeignet.

Es existieren noch weitere organische Materialien, die in einer Grundierung die Dichtigkeit eines Behälters gegen Gasdurchtritt steigern. Zum Beispiel kann Kaseinpulver mit Wasser gemischt und mittels Calciumhydroxid denaturiert werden. Das Kasein steigert die Dichtigkeit und die mechanische Festigkeit des Behälters. Mit Calciumhydroxid denaturiertes Kasein wird auch in gewissem Maße wasserabweisend. Es ist auch möglich, das Kasein mit Natron zu denaturieren, wobei es aber nicht wasserabweisend wird.

In der Praxis wurden 30 g Kaseinpulver mit 100 ml Wasser über etwa 8 bis 10 Stunden quellen gelassen, 30 g Calciumhydroxid wurden beigegeben und verrührt. Nach nochmaliger Zugabe von 50 ml Wasser wurde die Lösung gesiebt und zur Grundierung verwendet. Diese Grundierung kann nach der Grundierung mit Cellulosefasern oder alternativ zur Grundierung mit Cellulosefasern aufgebracht werden. Auch kann die Grundierung sowohl Cellulosefasern als auch Kasein enthalten.

Auch Molke eignet sich als Bestandteil der Grundierung. Molke kann durch Hitze (90°-100°C) denaturiert werden. Auch Molke als Bestandteil der Grundierung steigert die Festigkeit des beschichteten Behälters. Die Molkebeschichtung ist selbst nicht wasserabweisend und muss daher mit einer zweiten Beschichtung wasserdicht gemacht werden.

Schließlich eignen sich gelbildende Bestandteile wie Agar Agar (Gelatine aus Algen) oder Flohsamenschalen (Samenschalen der Wegericharten Plantago indica, Plantago afra) zur Beimischung zur Grundierung. Agar Agar-Pulver wird z.B. zu diesem Zweck mit Wasser gemischt und für 1 min. bei 100°C denaturiert. Beim Erkalten härtet es aus und geliert. Das Gel kann auf den Behälter aufgetragen werden und bildet eine dünne Schicht, welche die Poren des Faserstoffs verschließt, die Festigkeit steigert und Wasser abweist.

Ein ähnlicher Effekt wird erreicht, wenn gemahlene Flohsamenschalen in Wasser eingeweicht und nach ca. 20 min Quellen auf den Behälter aufgetragen werden.

Wie erwähnt, können die Bestandteile der Grundierung gleichzeitig in Wasser gelöst und als Mischung auftragbar sein. Es ist aber auch möglich, die Grundierung als mehrere Lagen mit verschiedenen Bestandteilen auf den Behälter aufzubringen. Alle vorstehend genannten möglichen Bestandteile der Grundierung sind biologisch abbaubar.

Es kann auch eine Beschichtung aus Siliziumdioxid SiO₂ aufgebracht werden, die besonders dicht und widerstandsfähig ist. Je nach der Modifikation beziehungsweise dem Ordnungsgrad des Siliziumdioxids ist dieses nur schlecht wasserlöslich. Auf jeden Fall ist es bioinert, d.h. dass es zu keiner chemischen und/oder biologischen Wechselwirkung zwischen Siliziumdioxid und anderen Stoffen kommt. Diese Beschichtung kann z.B. durch einen Sol-Gel-Prozess an der Innenseite des Behälters abgelagert werden. Die Beschichtung kann entweder nur an dem Behälter oder gleichzeitig an dem Behälter und dem Anschlusselement angebracht werden.

In der Praxis kann das Material des Anschlusselements wasserlöslich und/oder kompostierbar sein. Wasserlöslich bedeutet, dass sich das Anschlusselement innerhalb einer Woche, bevorzugt innerhalb eines Tages, und besonders bevorzugt innerhalb weniger Stunden, in Wasser auflöst. Dadurch kann das Anschlusselement besonders schnell biologisch abgebaut werden. Kompostierbar ist ein Polymer gemäß der Europäischen Norm EN13432, wenn es in einer industriellen Kompostieranlage, unter anderem, innerhalb von 6 Monaten zu mindestens 90 % durch Mikroorganismen in CO₂ umgewandelt wird, wobei in der Ausgangsmasse maximal 1 % Zusatzstoffe enthalten sind, die als unbedenklich eingestuft sind. Vorzugsweise ist nicht nur das Anschlusselement kompostierbar, sondern es sind alle Komponenten, d.h. das Anschlusselement, der Behälter und ggf. die Abdeckung kompostierbar. In der Praxis können alle Komponenten ohne industriell definierte Bedingungen kompostierbar sein. Dadurch ist eine Kompostierung auch ohne industrielle Kompostieranlage möglich. Selbst wenn der Formkörper aus Faserstoff und das Anschlusselement nicht mit dem sortierten Kompost-Müll entsorgt werden, sondern in die Umwelt gelangen, werden sie innerhalb weniger Monate zersetzt. Demgegenüber ist die überwiegende Mehrheit von kompostierbaren Polymeren, darunter häufig verwendete Polylactide, meist nur bei industriell definierten Bedingungen oder über lange Zeiträume von mehreren Jahren biologisch abbaubar. Der ökologische Fußabdruck des Formkörpers aus Faserstoff und des Anschlusselements sind gegenüber Behältnissen aus vielen anderen Materialien bei ähnlicher mechanischer Stabilität somit erheblich minimiert.

Durch die Verbindungswand mit Durchbrüchen kann eine besonders stabile formschlüssige Verbindung erreicht werden. Wenn der Formkörper aus Faserstoff als Behälter mit einer Öffnung ausgebildet ist und das Anschlusselement eine die Öffnung des Behälters umgebende Verbindungswand mit Durchbrüchen aufweist, welche von dem Faserstoff des Behälters durchragt werden, wird das Anschlusselement im Bereich der Öffnung verankert. Das Anschlusselement kann eine ringförmige dünne Verbindungswand aufweisen, in der Durchbrüche angeordnet sind. Insbesondere kann die Verbindungswand gitterförmig ausgebildet sein, so dass die Fläche der Durchbrüche etwa gleich groß ist wie oder größer als die Fläche der zwischen den Durchbrüchen verbleibenden Stege. Das Anschlusselement kann in eine Saugform eingelegt werden, in der der Behälter aus Faserstoff geformt wird. Die Verbindungswand hat dann einen geringen Abstand von z.B. 1 mm zu einer porösen Wand der Saugform. Aus einer Pulpe kann durch die poröse Wand der Saugform hindurch Wasser abgesaugt werden, so dass sich der Faserstoff auf der porösen Wand der Saugform ablagert. Im Bereich der Verbindungswand des Anschlusselements mit Durchbrüchen durchragt der abgelagerte Faserstoff die Durchbrüche und verankert so das Anschlusselement fest in der entstehenden Faserstoffschicht, die den Behälter bildet. Wenn der angesaugte Faserstoff gepresst wird, kann das Pressen beispielsweise durch ein aufblasbares Presswerkzeug erfolgen, das gegen die Innenseite des geformten Faserstoffbehälters gedrückt wird und so die Behälterwand aus Faserstoff mit dem eingeformten Abschnitt des Anschlusselements entwässert.

Ferner kann der Faserstoff-Formkörper bei einer Temperatur mit dem Anschlusselement verpresst werden, bei der im Falle eines thermoplastischen Anschlusselements das spritzgegossene Material erweicht oder an seiner Oberfläche aufschmilzt und in die Poren des Faserstoffs eindringt.

Wenn der Faser-Formkörper und das Anschlusselement ein Behältnis mit einer Abdeckung bilden, kann die Abdeckung des Behältnisses in der Praxis als Siegelfolie ausgebildet sein. Siegelfolien können aus dicht beschichtetem Faserstoff bestehen. Sie sind dünn, flexibel und gleichzeitig gasdicht. Die Beschichtung der Siegelfolie kann insbesondere identisch mit der Beschichtung des Behälters sein. Sie kann aber auch eine andere Zusammensetzung aufweisen. Wenn die Beschichtung der Abdeckung mit der Beschichtung des Behälters identisch ist und/oder diese beiden Beschichtungen durch das gleiche Lösungsmittel lösbar sind, können der Behälter und die Abdeckung durch stoffschlüssiges Fügen besonders einfach und sicher miteinander verbunden werden. Beispielsweise kann die beschichtete und noch nicht vollständig getrocknete Abdeckung derart an die Öffnung des Behälters gelegt werden, dass die Öffnung vollständig abgedeckt ist. Der Behälter und die Abdeckung können dann aneinandergepresst werden, wobei die Beschichtung des Behälters angelöst wird und später in Verbindung mit der Beschichtung der Abdeckung trocknet. Durch eine derartige Abdeckung und Verbindung weist das Behältnis einen minimalen Materialverbrauch und nur wenige verschiedene Materialien auf, was für die biologische Abbaubarkeit und/oder Kompostierbarkeit vorteilhaft ist.

Zusätzlich oder alternativ kann die Abdeckung aus dem gleichen Material gebildet sein wie das Anschlusselement. In diesem Fall kann die Abdeckung ein Deckel, insbesondere ein Schraubdeckel, sein. Ein Deckel deckt die Öffnung des Behälters ab, ist von der Öffnung lösbar und kann wieder angebracht werden. Hierfür ist der Deckel formschlüssig mit dem Behälter und/oder mit dem Anschlusselement verbunden, beispielsweise indem der Deckel mit einem Innengewinde auf ein Außengewinde des Behälters oder des Anschlusselements aufgeschraubt wird. Natürlich kann die formschlüssige Verbindung auch durch andere konstruktive Maßnahmen, die hierfür geeignet sind, erfolgen, wie zum Beispiel Rastvorsprünge und komplementäre Aufnahmen oder einen Bayonettverschluss. Wenn die Abdeckung wie das Anschlusselement aus spritzgegossenem Material besteht, weist das Behältnis eine besonders hohe Festigkeit und Dichtigkeit auf.

Natürlich kann das Behältnis auch eine Mehrzahl von Abdeckungen, beispielsweise eine oben beschriebene Siegelfolie und zusätzlich einen darüber angeordneten, mit dem Behälter oder dem Anschlusselement verschraubbaren Deckel aufweisen.

In der Praxis kann die oben beschriebene Grundierung eine erste Beschichtung sein und der Formkörper/Behälter kann eine zweite zumindest lokal aufgetragene Beschichtung aufweisen. Die zweite Beschichtung kann auf die Grundierung aufgetragen sein. Wenn die Grundierung nur auf einer Seite des Behälters, also entweder der Innenseite oder der Außenseite, aufgetragen ist, ist es auch möglich, dass die zweite Beschichtung zusätzlich oder alternativ auf derjenigen Seite des Behälters aufgetragen ist, auf der die Grundierung nicht aufgetragen ist. Durch die zweite Beschichtung kann die Gasdichtigkeit und/oder die Festigkeit des Behälters erhöht werden. Insbesondere kann die zweite Beschichtung derart auf dem Behälter aufgebracht sein, dass die Festigkeit des Behälters zumindest in einem Bereich erhöht ist, in welchem das Anschlusselement und/oder die Abdeckung angeordnet sind. In einem derartigen Bereich kann der Behälter aufgrund der erhöhten Festigkeit eine hohe oder zyklische Belastung durch das Anschlusselement und/oder die Abdeckung besonders gut aufnehmen.

Die zweite Beschichtung kann in der Praxis aus Leinöl, Carnaubawachs und/oder Bienenwachs, also aus natürlichen Wachsen und/oder Ölen bzw.

Fetten, gebildet sein. Natürliche Wachse und/oder Lipide bestehen überwiegend aus Estern von Fettsäuren und sind als öllösliche Produkte nach dem Testverfahren CEC-L-33-A-93 gut biologisch abbaubar.

Leinöl dient der verbesserten Formbarkeit des Öl-Wachs-Gemischs, welches die zweite Beschichtung bildet, und der Minimierung der Brüchigkeit nach dem Trocknen. Es sollte pharmazeutisches, also vollkommen geklärtes reines Leinöl verwendet werden. Leinöl ist eines der wenigen härtenden Öle und wird seit Jahrhunderten für die Holzimprägnierung benutzt. Eine Leinölschicht allein ist aber offenporig, lässt also Wasser und Luft zum Teil durch, und eignet sich nicht zur dauerhaft dichten Verpackung von Lebensmitteln.

Carnaubawachs ist ein sehr hartes, tropisches Wachs mit hoher Schmelztemperatur (ca. 85-89°C). Es hat kaum Eigengeruch oder Eigengeschmack und ist wasserdicht. Es ist im trockenen Zustand sehr brüchig, härtet innerhalb von Sekunden aus. Durch seine Härte ist es zudem sehr stabil gegen Abrieb. Es ist für die Verpackung von Lebensmitteln zugelassen und wird seit langem auch als Überzug zur Steigerung der Haltbarkeit von z.B. Mangos, Süßigkeiten etc. eingesetzt.

Bienenwachs ist ein u.a. in Europa erzeugtes Wachs, das weniger hart als Carnaubawachs ist. In einer Mischung mit Carnaubawachs trägt Bienenwachs zur Verringerung der Brüchigkeit bei. Es hat kaum Eigengeruch oder Eigengeschmack und ist ebenfalls zur Verwendung in Verbindung mit Lebensmitteln zugelassen. Sein Schmelzpunkt liegt bei ca. 65°C.

In der Praxis kann das Anschlusselement als Verstärkungsring ausgebildet sein. Der Verstärkungsring kann einen in axialer Richtung länglichen Abschnitt in der Art einer Manschette oder eines Rohrabschnitts aufweisen. Der längliche Abschnitt kann beispielsweise die Verbindungswand mit Durchbrüchen bilden. Der Verstärkungsring kann mit dem länglichen Abschnitt insbesondere in der Umfangswand des Behälters eingebettet sein. Dadurch hat das Anschlusselement einen festeren Sitz am Behälter.

In der Praxis kann der Behälter einen Flansch aufweisen. Der Flansch ist integral mit dem Behälter aus beschichtetem Faserstoff gebildet. Insbesondere kann der Flansch die Umfangswand im Bereich der Öffnung umlaufen. Hierdurch steht eine große Fläche zur Verfügung, an welche die Abdeckung angebracht werden kann.

Wenn der Behälter den Flansch aufweist und das Anschlusselement als Verstärkungsring ausgebildet ist, kann der Verstärkungsring ferner an einer zum Boden des Behälters weisenden Seite des Flansches oder einer dieser gegenüberliegenden (also einer nach oben weisenden) Seite des Flansches anliegen. Derartige Ausbildungen des Faserformkörpers und des Anschlusselements sind besonders gut als beispielsweise Getränkepulver-Portionsverpackung, insbesondere als eine Kaffeekapsel, geeignet. Durch den Verstärkungsring sind der Flansch und der daran angrenzende Bereich des Behälters mechanisch verstärkt. Eine derartige Verstärkung ist bei Kaffeekapseln mit einem Behälter aus Faserstoff besonders vorteilhaft, da ein Greif-Mechanismus von Kaffeemaschinen für Kaffeekapseln an dem Flansch angreift, um die Kaffeekapsel aus einer ersten Position in eine zweite Position zu bewegen. Der Verstärkungsring am Flansch verleiht den Kaffeekapseln aus Faserstoff die hierfür erforderliche Festigkeit.

Eine Kaffee-Portionsverpackung in Gestalt einer Kapsel bestehend aus dem hier beschriebenen Faserformkörper mit Anschlusselement hat eine hohe Dichtigkeit, die sehr viel höher als bei gängigen Kaffee-Pads aus unbeschichteten Cellulosefasern ist, und eine bessere Umweltverträglichkeit als gängige Kaffeekapseln aus Aluminium. Folglich kann man den Kaffee lange aufbewahren, ohne viel Müll zu produzieren. Die hier beschriebene Kaffeekapsel besteht allein aus natürlichen Rohstoffen und kann hervorragend biologisch abgebaut und/oder kompostiert werden.

Natürlich ist es auch möglich, den Faserformkörper mit dem Anschlusselement wie oben beschrieben als ein Behältnis mit einem wiederverschließbaren Schraubverschluss auszubilden und diesen mit Kosmetika, bspw. Cremes, oder mit unverderblichen Produkten, bspw. Schrauben, zu befüllen.

Die Erfindung betrifft auch ein Verfahren zur Herstellung eines Formkörpers mit Anschlusselement gemäß den Ansprüchen 8 bis 12. Im Falle eines Behältnisses mit einem Behälter aus Faserstoff, einer Abdeckung und einer biologisch abbaubaren Beschichtung kann das an dem Behälter angeordnete Anschlusselement aus biologisch abbaubarem Material bestehen und den Behälter zumindest lokal verstärken. Das Verfahren kann mindestens einen der folgenden Verfahrensschritte umfassen:
- Ansaugen von Fasermaterial aus einer Pulpe durch eine Saugform und Verdichten des Fasermaterials zu dem Behälter;
- Entwässern und Trocknen des Behälters;
- Beschichten des Behälters mit einer Grundierung;
- Herstellen, insbesondere Spritzgießen des Anschlusselements;
- Anbringen der Abdeckung.

In Bezug auf Einzelheiten der jeweiligen Verfahrensschritte wird auf die obige Beschreibung zu den damit erzeugten Merkmalen verwiesen. Die in Zusammenhang mit diesen Merkmalen genannten Vorteile gelten für das Verfahren entsprechend.

Wie oben bereits beschrieben, kann, wenn der Formkörper einen Behälter bildet, der Behälter zwei Beschichtungen aufweisen. Die zweite Beschichtung kann insbesondere durch Eintauchen des Behälters in ein Warmbad aus natürlichen Wachsen und/oder Ölen bzw. Fetten erfolgen. Anschließend kann der getränkte Behälter warmgepresst und abgekühlt werden. Durch das Warmpressen des getränkten Behälters wird seine Geometrie fixiert und die zweite Beschichtung kann in nicht gefüllte Poren des Faserstoffs eindringen.

Weitere praktische Ausführungsformen und Vorteile der Erfindung sind nachfolgend im Zusammenhang mit den Zeichnungen beschrieben. Es zeigen:
- Fig. 1: ein Behältnis in einer ersten Ausführungsform als Kaffeekapsel in einer vertikal geschnittenen Explosionsdarstellung ohne Verbindungswand mit Durchbrüchen;
- Fig. 2: das Behältnis aus Fig. 1 ohne Abdeckung in einer Ansicht von schräg oben;
- Fig. 3: das Behältnis aus Fig. 1 in einer Ansicht von schräg unten;
- Fig. 4: das Behältnis in einer zweiten Ausführungsform als Tiegel für Kosmetikprodukte in einer vertikal geschnittenen Explosionsdarstellung, ebenfalls ohne Verbindungswand mit Durchbrüchen;
- Fig. 5: das Behältnis in einer dritten Ausführungsform als Tiegel für Kosmetikprodukte in einer vertikal geschnittenen Explosionsdarstellung, wiederum ohne Verbindungswand mit Durchbrüchen;
- Fig. 6: ein Anschlusselement mit Verbindungswand und Durchbrüchen für einen als Behälter ausgebildeten Formkörper aus Faserstoff in der Seitenansicht;
- Fig. 7: eine entlang der Schnittlinie VII - VII geschnittene Ansicht des Anschlusselements aus Fig. 6;
- Fig. 8: eine als Flasche ausgebildete Ausführungsform eines Faserformkörpers mit dem Anschlusselement aus den Figuren 6 und 7 mit Abdeckung;
- Fig. 9: eine vergrößerte Draufsicht auf einen Abschnitt einer Saugform zur Herstellung der Flasche aus Fig. 8;
- Fig. 10: der Abschnitt der Saugform aus Fig. 9 mit eingelegtem Anschlusselement aus den Fig. 6 und 7 aus spritzgegossenem Material;
- Fig. 11: der Abschnitt der Saugform aus Fig. 9 mit eingelegtem Anschlusselement und angesaugter Faserstoffschicht.

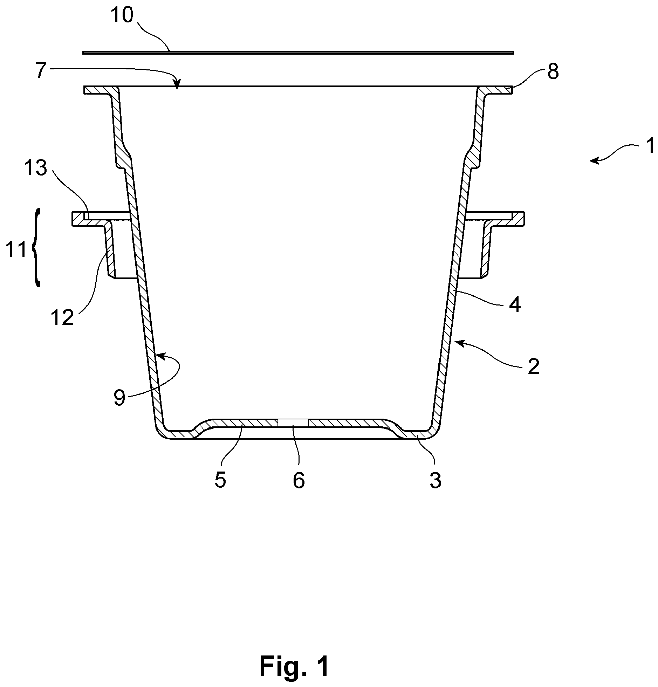

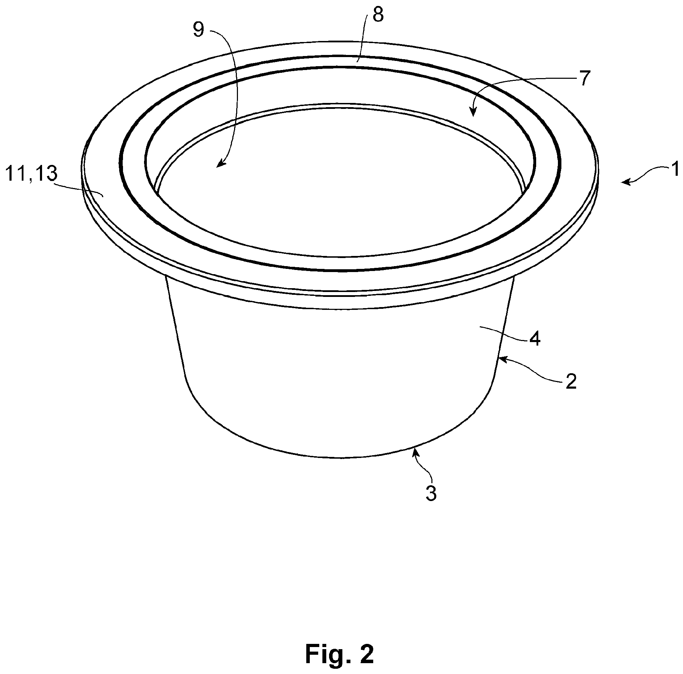

Die Figuren 1 bis 3 zeigen ein Behältnis 1, das als Kaffeekapsel ausgebildet ist. Das Behältnis 1 weist einen Behälter 2 auf und ist im Wesentlichen rotationssymmetrisch. Es weist einen Boden 3 und eine den Boden 3 umfassende Umfangswand 4 auf. In dem Boden 3 ist eine zentrale und rotationssymmetrische Vertiefung 5 mit einem darin ebenfalls rotationssymmetrisch und zentral angeordneten Perforationsbereich 6 eingebracht. Der Perforationsbereich wird von mindestens einer Nadel durchstochen, um das Austreten von unter Druck in das Behältnis 1 zugeführter Flüssigkeit zu ermöglichen. Die Vertiefung 5 ist in Richtung des Behälterinneren orientiert, d.h. in Richtung einer dem Boden 3 gegenüberliegenden Öffnung 7 des Behälters 2. An der Öffnung 7 weist der Behälter 2 einen die Öffnung 7 und die Umfangswand 4 rotationssymmetrisch umfassenden Flansch 8 auf. Der Flansch 8 weist von der Umfangswand 4 in radialer Richtung nach außen und ist im Wesentlichen parallel zum Boden 3 orientiert.

Der Behälter 2 mit dem Boden 3, der Umfangswand 4 und dem Flansch 8 ist einteilig aus Faserstoff gebildet. Auf der in das Behälterinnere weisenden Innenseite 9 des Behälters 2 und auf der nach oben weisenden Oberfläche des Flansches 8 ist eine Grundierung (nicht dargestellt) aufgebracht. Die Grundierung kann beispielsweise aus Cellulose und Casein gebildet sein und ist somit biologisch abbaubar. Sie kann zusätzlich oder alternativ aber auch andere biologisch abbaubare Bestandteile, beispielsweise Molke, Agar Agar und/oder Flohsamenschalen, beinhalten. Die Grundierung erhöht die Gasdichtigkeit und die mechanische Stabilität des Behälters 2.

Die Öffnung 7 ist, wie in Figur 1 angedeutet, mit einer Abdeckung 10 abgedeckt, welche als Siegelfolie ausgebildet ist. Die Siegelfolie 10 ist flexibel und gleichzeitig gasdicht. Sie ist auf dem Flansch 8 aufliegend fixiert und verschließt somit den Behälterinnenraum gegenüber der Umgebung. Für die Fixierung auf dem Flansch weist die Siegelfolie 10 auf der in Richtung des Flansches 8 orientierten Oberfläche die gleiche Beschichtung (nicht dargestellt) auf wie die Behälterinnenseite 9 und die nach oben weisende Oberfläche des Flansches 8. Die Beschichtungen der Siegelfolie 10 und des Flansches 8 sind stoffschlüssig miteinander verbunden.

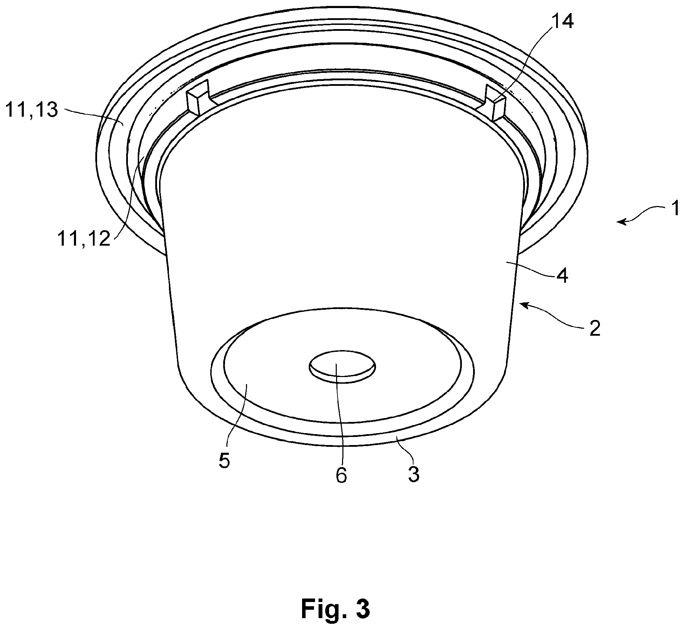

Im Bereich der Öffnung 7 weist das Behältnis 1 ein spritzgegossenes Anschlusselement 11 auf, das aus einem wasserlöslichen und biologisch abbaubaren Thermoplast gebildet ist. Das biologisch abbaubare Thermoplast kann eine thermoplastisch verarbeitbare Stärke sein, wie sie in den Druckschriften EP 0 118 240 A2 oder EP 0 397 819 B1 beschrieben ist. Das Anschlusselement ist als Verstärkungsring 11 mit einem vertikalen Ringabschnitt 12 und einem horizontalen Ringabschnitt 13 ausgebildet. Mit dem vertikalen Ringabschnitt 12 liegt der Verstärkungsring 11 außenseitig an einem oberen Abschnitt der Umfangswand 4 an. An dem vertikalen Ringabschnitt 12 sind, wie in Figur 3 gut zu erkennen, Aussparungen 14 angeordnet, mit denen die Kaffeekapsel 1 in einer Aufnahmevorrichtung einer Kaffeemaschine (nicht dargestellt) arretiert werden kann. Der vertikale Ringabschnitt 12 kann auch als Verbindungswand mit Durchbrüchen ausgebildet sein und bei der Herstellung des Faserstoff-Formkörpers (Behälter 2) im Fasergussverfahren in den Faserstoff eingebettet werden.

Der horizontale Ringabschnitt 13 ragt von einem oberen Ende des vertikalen Ringabschnitts 12 in radialer Richtung nach außen über den Flansch 8 hinausgehend hervor. In dem horizontalen Ringabschnitt 13 ist in das obere Ende eine radiale Aussparung zur Aufnahme des Flansches 8 ausgebildet. Der Flansch 8 und der horizontale Ringabschnitt 13 sind also komplementär gestaltet, so dass der Flansch 8 und der horizontale Ringabschnitts 13 oberseitig in einer gemeinsamen Ebene abschließen. Der Flansch 8 ist folglich vollständig durch den horizontalen Ringabschnitt 13 und die Siegelfolie 10 eingeschlossen.

Die Siegelfolie und der Verstärkungsring können durch einen Klebstoff, vorzugsweise einen biologisch abbaubaren Klebstoff, miteinander verbunden sein.

Alternativ zu der hier dargestellten formschlüssigen Verbindung zwischen dem Anschlusselement 11 und dem Behälter 2 ist es möglich, das Anschlusselement 11 durch Anspritzen an den Behälter 2 stoffschlüssig mit diesem zu verbinden.

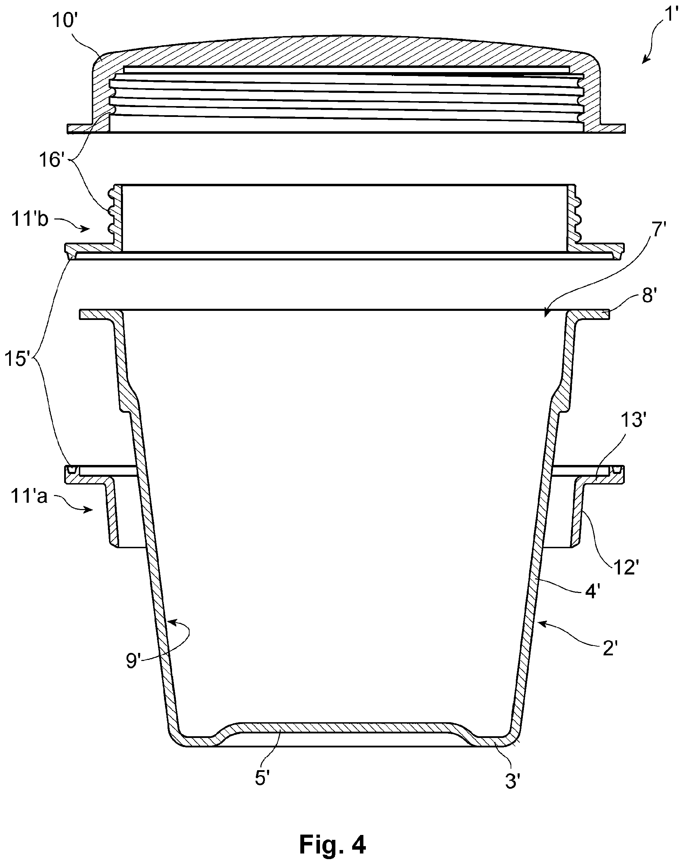

Die Figur 4 zeigt eine alternative Ausführungsform des Behältnisses 1' als ein Tiegel zur Aufnahme von Kosmetikprodukten. Sofern nicht anders indiziert, sind gleichartige Konstruktionselemente der Figur 4 mit gleichen Bezugszeichen versehen wie bereits oben genannt und zur Abgrenzung von den Konstruktionselementen der Kaffeekapsel mit einem Strich versehen. Der Tiegel 1' weist ebenfalls einen Behälter 2' mit einem Boden 3', einer Umfangswand 4', einer zentralen Vertiefung 5' im Boden 3', einer dem Boden 3' gegenüberliegenden Öffnung 7' sowie einem von der Umfangswand 4' radial nach außen weisenden Flansch 8' auf. Der Tiegel 1' ist im Wesentlichen rotationssymmetrisch. Auf der Innenseite 9' des Behälters 2' ist ebenfalls eine hier nicht dargestellte Grundierung aus biologisch abbaubarem Material aufgebracht, die die Gasdichtigkeit und die mechanische Stabilität des Behälters 2' erhöht.

Eine Abdeckung ist bei dem hier gezeigten Tiegel 1' als Deckel 10' ausgebildet. Zur Anbringung des Deckels 10' an dem Behälter 2' und zur Verstärkung des Behälters 2' im Bereich der Öffnung 7' ist ein zweiteiliges Anschlusselement 11' formschlüssig mit dem Behälter 2' verbunden.

Das zweiteilige Anschlusselement 11' ist zusammengesetzt aus einem unteren Stützring 11'a und einem oberen Gewindering 11'b. Der untere Stützring 11'a liegt wie oben im Zusammenhang mit der Kaffeekapsel 1 beschrieben, an der Umfangswand 4' mit einem vertikalen Ringabschnitt 12' außenseitig und an dem Flansch 8' mit einem horizontalen Ringabschnitt 13' an. Der vertikale Ringabschnitt 12' kann auch als Verbindungswand mit Durchbrüchen ausgebildet sein und bei der Herstellung des Faserstoff-Formkörpers (Behälter 2') im Fasergussverfahren in den Faserstoff eingebettet werden. Der horizontale Ringabschnitt 13' ragt radial über den Flansch 8' hervor. Auch der horizontale Ringabschnitt 13' weist in dem in Richtung des Deckels 10' weisenden Ende eine Aussparung auf, in die der Flansch 8' aufgenommen ist. Somit befinden sich eine in Richtung des Deckels 10' weisende Oberfläche des Flansches 8' und eine in Richtung des Deckels 10' weisende Oberfläche des horizontalen Ringabschnitts 13' in derselben Ebene. Der obere Gewindering 11'b weist denselben Außendurchmesser auf wie der untere Stützring 11'a. Der Innendurchmesser des oberen Gewinderings 11'b entspricht im Wesentlichen dem Durchmesser der Öffnung 7'. Der obere Gewindering 11'b ist an dem sich über den Flansch 8' radial hinaus erstreckenden horizontalen Ringabschnitt 13' des unteren Stützrings 11'a befestigt, so dass der Flansch 8' von dem horizontalen Ringabschnitt 13' des unteren Stützrings 11'a und von dem oberen Gewindering 11'b umschlossen ist. Zum Anbringen des zweiteiligen Anschlusselements 11' an dem Behälter 2' kann beispielsweise der untere Stützring 11'a von unten, also über den Boden 3', über die Umfangswand 4' des Behälters 2' geschoben werden, bis der untere Stützring 11'a in Anlage mit dem Flansch 8' ist und der obere Gewindering 11'b kann von oben auf den Flansch 8' und den unteren Stützring 11'a gedrückt werden. Dabei kann eine Nut-Feder-Verbindung 15' zwischen dem unteren Stützring 11'a und dem oberen Gewindering 11'b eine formschlüssige Verbindung eingehen. Dabei sind die Nut und die Feder der Nut-Feder-Verbindung 15' miteinander verrastet oder verklebt. Nach dem Verbinden schließen der untere Stützring 11'a und der obere Gewindering 11'b in radialer Richtung nach außen bündig miteinander ab.

Der Deckel 10' kann über eine Gewindeverbindung 16' mit dem oberen Gewindering 11'b verbunden und wieder gelöst werden. Dafür ist an dem oberen Gewindering 11'b ein Außengewinde und an dem Deckel 10' ein Innengewinde angeordnet. Wenn der Deckel 10' und der obere Gewindering 11'b über das Gewinde 16' verschraubt sind, schließen der Deckel 10' und der obere Gewindering 11'b radial außen bündig ab und das Behälterinnere ist gasdicht gegenüber der Umgebung verschlossen. Wenn der Deckel 10' von dem oberen Gewindering 11'b abgeschraubt ist, steht das Behälterinnere durch die Öffnung des oberen Gewinderings 11'b mit der Umgebung in Verbindung.

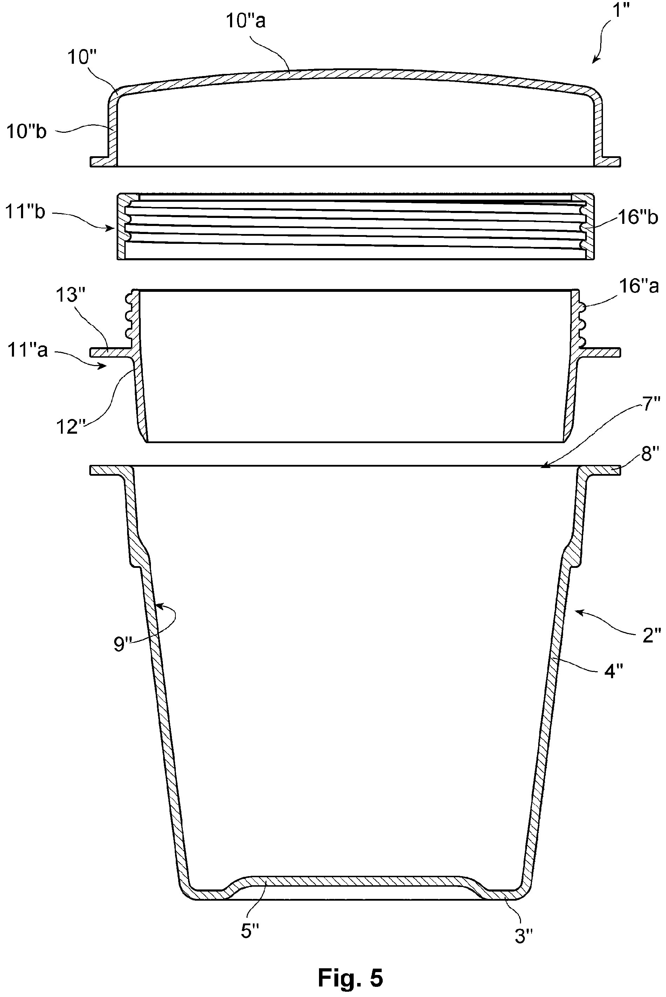

Die Figur 5 zeigt eine weitere alternative Ausführungsform des Behältnisses 1" als ein Tiegel zur Aufnahme von Kosmetikprodukten. Sofern nicht anders indiziert, sind gleichartige Konstruktionselemente der Figur 5 mit gleichen Bezugszeichen versehen wie oben genannt und zur Abgrenzung von den anderen Ausführungsformen mit zwei Strichen versehen. Der Tiegel 1" weist ebenfalls einen Behälter 2" mit einem Boden 3", einer Umfangswand 4", einer zentralen Vertiefung 5" im Boden 3", einer dem Boden 3" gegenüberliegenden Öffnung 7" sowie einem von der Umfangswand 4" radial nach außen weisenden Flansch 8" auf. Im Bereich der Öffnung ist der Behälter 2" leicht aufgeweitet, um ein Anschlusselement 11" aufnehmen zu können. Der Tiegel 1" ist im Wesentlichen rotationssymmetrisch. Auf der Innenseite 9" des Behälters 2" ist ebenfalls eine hier nicht dargestellte Grundierung aus biologisch abbaubarem Material aufgebracht, die die Gasdichtigkeit und die mechanische Stabilität des Behälters 2" erhöht. Das Anschlusselement 11" im Bereich der Öffnung 7" ist zweiteilig ausgebildet und formschlüssig sowie stoffschlüssig mit dem Behälter 2' verbunden. Eine Abdeckung ist auch bei dem hier gezeigten Tiegel 1" als Deckel 10" ausgebildet, welcher mit dem Anschlusselement 11" zusammenwirkt.

Das zweiteilige Anschlusselement 11" ist zusammengesetzt aus einem inneren Stützring 11"a und einem äußeren Gewindering 11"b. Der innere Stützring 11"a weist einen vertikalen Ringabschnitt 12" und einen horizontalen Ringabschnitt 13" auf, wobei der horizontale Ringabschnitt 13" den vertikalen Ringabschnitt 12" ca. auf halber Höhe außenseitig und rechtwinklig umgreift. An dem Bereich oberhalb des horizontalen Ringabschnitts 13" weist der vertikale Ringabschnitt 12" ein Außengewinde 16"a auf. Der Bereich des vertikalen Ringabschnitts 12" unterhalb des horizontalen Ringabschnitts 13" weist eine im Wesentlichen glatt-zylindrischen äußeren Oberfläche auf, die komplementär zu der Oberfläche des aufgeweiteten Bereichs des Behälters 2" ist. Der innere Stützring 11"a ist somit in den Behälter 2" eingesetzt. Er liegt mit dem vertikalen Ringabschnitt 12" an der Umfangswand 4" innenseitig und mit dem horizontalen Ringabschnitt 13" an dem Flansch 8" oberseitig an. Die aneinander anliegenden Oberflächen sind miteinander verklebt, um eine hohe Dichtigkeit und mechanische Stabilität zu gewährleisten. Das Verkleben kann zum Beispiel auch dadurch erreicht werden, dass der Behälter 2" und der vertikale Ringabschnitt 12" ineinandergefügt und bei einer Temperatur, bei der das spritzgegossene Material erweicht oder schmilzt, miteinander verpresst werden. Das aufgeschmolzene Material des vertikalen Ringabschnitts 12" haftet dann an dem Behälter 2" und dringt ggf. in seine Poren ein. Das Verkleben ist jedoch optional, eine sichere Fügung kann beispielsweise auch durch eine Presspassung erzielt werden. Alternativ zum Einsetzten des inneren Stützrings 11"a in den Behälter 2" kann der vertikale Ringabschnitt 12" unterhalb des horizontalen Ringabschnitts 13" auch als Verbindungswand mit Durchbrüchen ausgebildet sein und bei der Herstellung des Faserstoff-Formkörpers (Behälter 2') im Fasergussverfahren in den Faserstoff der Behälterwand eingebettet werden. Radial außenseitig schließt der horizontale Ringabschnitt 13" bündig mit dem Flansch 8" ab. Der Innendurchmesser des oberen Gewinderings 11'b entspricht im Wesentlichen dem Durchmesser der Öffnung 7'. Der Bereich des vertikalen Ringabschnitts 12" mit dem Außengewinde 16"a ragt von dem Behälter 2" nach oben hervor.

Der äußere Gewindering 11"b weist auf der nach innen weisenden Seite ein Innengewinde 16"b auf, das komplementär zu dem Außengewinde 16"a des inneren Stützrings 11"a ausgebildet ist. Der nach außen weisende Oberfläche des äußeren Gewinderings 11"b ist glatt-zylindrisch und sein Durchmesser ist kleiner als der Durchmesser des horizontalen Ringabschnitts 13". Somit ragt der horizontale Ringabschnitt 13", wenn der äußere Gewindering 11"b auf den inneren Stützring 11"a aufgeschraubt ist, radial über den äußeren Gewindering 11"b hinaus.

Der Deckel 10" weist eine gewölbte Deckfläche 10"a und einen diese umgreifenden Ringabschnitt 10"b auf. Der Innendurchmesser des Ringabschnitts 10"b entspricht dem Außendurchmesser des äußeren Gewinderings 11"b. Somit kann der Deckel 10" von oben auf den äußeren Gewindering 11"b gesteckt und wieder gelöst werden.

Vorliegend sind der Deckel 10', 10", der untere Stützring 11'a, der innere Stützring 11"a, der obere Gewindering 11'b und der äußere Gewindering 11"b aus einem wasserlöslichen und kompostierbaren Thermoplast spritzgegossen. Alternativ zu der hier dargestellten formschlüssigen Verbindung zwischen dem zweiteiligen Anschlusselement 11', 11" und dem Behälter 2', 2" ist es möglich, das Anschlusselement 11', 11" einteilig auszubilden und/oder das Anschlusselement 11', 11" durch Anspritzen an den Behälter 2', 2" stoffschlüssig mit diesem zu verbinden.

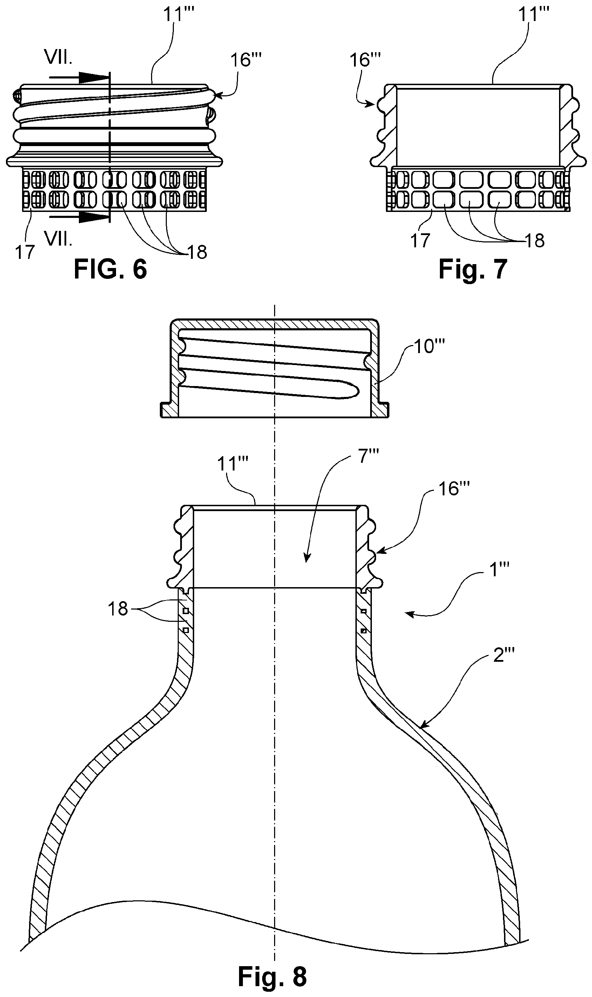

Die Figuren 6 und 7 zeigen eine Seitenansicht und einen Längsschnitt einer weiteren Ausführungsform eines Anschlusselements 11"' und Figur 8 zeigt ein als Flasche ausgebildetes Behältnis 1"' mit diesem Anschlusselement 11"' und einem Behälter 2"'. Der obere Abschnitt des Anschlusselements 11‴ weist wieder ein Außengewinde 16"' auf, auf das eine als Schraubdeckel ausgebildete Abdeckung 10"' aufgeschraubt werden kann. Der Behälter 2‴ kann beispielsweise ein Getränk, ein Spülmittel oder ein sonstiges flüssiges, gelförmiges oder pulverförmiges Material aufnehmen. Das Behältnis 1‴ wird durch den Schraubdeckel 10"' dicht verschlossen. Damit das Anschlusselement besonders dicht und haltbar mit dem Behälter 2"' verbunden ist, weist es unterhalb des Außengewindes 16‴ eine dünne ringförmige Verbindungswand 17 auf, welche die Öffnung 7"' des Behälters 2"' umgibt. Die Verbindungswand 17 ist mit einer Vielzahl von Durchbrüchen 18 versehen, zwischen denen sich Stege befinden, welche die Verbindungswand 17 bilden.

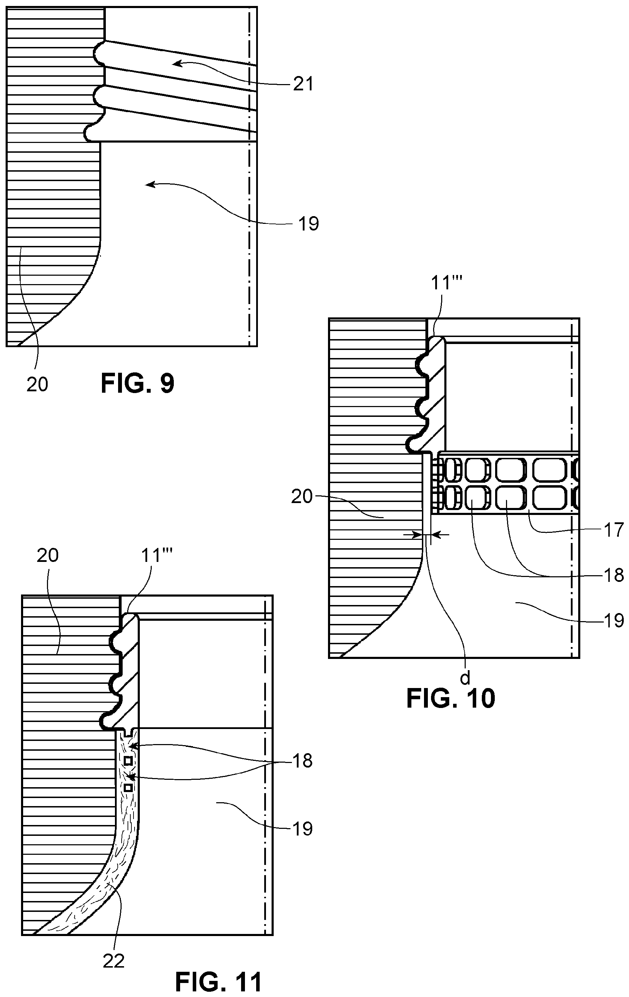

Die Figuren 9 - 11 zeigen einen oberen Abschnitt einer mehrteiligen Saugform 19 mit einer porösen Wand 20 zur Herstellung des Behälters aus Fig. 8. Die Saugform 19 weist zwei, drei vier oder mehr Teile auf, um die Entnahme des in der Saugform 19 gebildeten Formkörpers zu ermöglichen. Die poröse Wand der Saugform kann auf herkömmliche Weise durch einen Grundkörper aus Kunststoff oder Metall mit Absaugkanälen erzielt werden, in den eine siebartige Struktur eingelegt wird, welche die poröse Wand bildet. Bei der dargestellten Ausführungsform wird die poröse Wand 20 der Saugform 19 im 3D-Druckverfahren hergestellt, wobei in das Material der porösen Wand 20 flüssigkeitsdurchlässige Kanäle eingebettet werden.

Die Saugform 19 weist einen oberen Aufnahmeabschnitt 21 für das spritzgegossene Anschlusselement 11"' auf. Für die Herstellung des Faserstoff-Behälters 2‴ wird das Anschlusselement 11"' in den Aufnahmeabschnitt 21 der Saugform 19 so eingelegt, dass die Verbindungswand 17 des Anschlusselements 11"' einen geringen Abstand d in der Größenordnung von 1 mm von der porösen Wand 20 der Saugform 19 hat. Die Saugform 19 wird anschließend in Pulpe getaucht und durch die poröse Wand 20 wird Wasser abgesaugt, so dass sich eine Schicht aus Faserstoff 22 auf der porösen Wand 20 der Saugform 19 ablagert. Dabei dringt der Faserstoff 22 durch die Durchbrüche 18 der Verbindungswand 17 des Anschlusselements 11‴ und durchragt die Durchbrüche 18.

In der Praxis kann anschließend die Faserstoffschicht des Behälters 2"' verdichtet werden, indem ein aufblasbares Presswerkzeug (nicht dargestellt) gegen die Innenseite der abgelagerten Faserschicht gedrückt wird. Die Faserschicht wird dabei entwässert und verdichtet und schließt die Stege zwischen den Durchbrüchen 18 in der Verbindungswand 17 fest ein.

In den Zeichnungen sind rotationssymmetrische Behältnisse dargestellt. Die Öffnungen weisen einen kreisförmigen lichten Querschnitt auf. Der Fachmann erkennt, dass die Behältnisse und ihre Öffnungen eine von der Kreisform abweichende Form aufweisen können. Die Behälter und ihre Öffnungen können beispielsweise viereckig sein. In diesem Fall haben auch die Anschlusselemente die Form eines viereckigen Rings, der eine viereckige Öffnung umschließt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Behältnis, Kaffeekapsel
- 2: Formkörper aus Faserstoff, Behälter
- 3: Boden
- 4: Umfangswand
- 5: Vertiefung
- 6: Perforationsbereich
- 7: Öffnung des Behälters
- 8: Flansch
- 9: Behälterinnenseite
- 10: Abdeckung, Siegelfolie
- 11: Anschlusselement, Verstärkungsring
- 12: vertikaler Ringabschnitt
- 13: horizontaler Ringabschnitt
- 14: Aussparungen
- 1': Behältnis, Creme Tiegel
- 2': Formkörper aus Faserstoff, Behälter
- 3': Boden
- 4': Umfangswand
- 5': Vertiefung
- 7': Öffnung des Behälters
- 8': Flansch
- 9': Behälterinnenseite
- 10',10‴: Abdeckung, Deckel
- 11': zweigeteiltes Anschlusselement
- 11'a: unterer Stützring
- 11'b: oberer Gewindering
- 12': vertikaler Ringabschnitt
- 13': horizontaler Ringabschnitt
- 15': Nut-Feder-Verbindung
- 16': Gewindeverbindung
- 1": Behältnis, Creme Tiegel
- 2": Formkörper aus Faserstoff, Behälter
- 3": Boden
- 4": Umfangswand
- 5": Vertiefung
- 7": Öffnung des Behälters
- 8": Flansch
- 9": Behälterinnenseite
- 10": Abdeckung, Deckel
- 10"a: Deckfläche
- 10"b: Ringabschnitt
- 11": zweigeteiltes Anschlusselement
- 11"a: innerer Stützring
- 11"b: äußerer Gewindering
- 12": vertikaler Ringabschnitt
- 13": horizontaler Ringabschnitt
- 16": Gewindeverbindung
- 16"a: Außengewinde
- 16"b: Innengewinde
- 1‴: Behältnis, Flasche
- 2‴: Formkörper aus Faserstoff, Behälter
- 7‴: Öffnung
- 11‴: Anschlusselement
- 17: Verbindungswand
- 18: Durchbruch
- 19: Saugform
- 20: Aufnahmeabschnitt
- 21: poröse Wand
- 22: Faserstoff
- d: Abstand

## Patentansprüche

1. Formkörper aus Faserstoff (2"') mit einem Anschlusselement (11"'),
**dadurch gekennzeichnet, dass**
das Anschlusselement (11"') eine Verbindungswand (17) mit Durchbrüchen (18) aufweist, welche von dem Faserstoff des Formkörpers (2"') durchragt werden.

2. Formkörper aus Faserstoff (2"') nach Anspruch 1, **dadurch gekennzeichnet, dass** er mindestens eins der folgenden Merkmale aufweist:
• der Formkörper (2"') ist ein mindestens eine Öffnung (7"') aufweisender Behälter (2"');
• die Verbindungswand umgibt die Öffnung (7"');
• der Behälter (2"') weist eine Abdeckung für die Öffnung (7"') auf;
• der Behälter (2"') weist eine biologisch abbaubare oder bioinerte Beschichtung auf;
• das Anschlusselement (11‴) ist spritzgegossen;
• das Anschlusselement (11‴) besteht aus biologisch abbaubarem material;
• das Anschlusselement (11"') verstärkt den Behälter (2"') zumindest im Bereich der Öffnung (7"') lokal.

3. Formkörper aus Faserstoff (2"') nach Anspruch 2, **dadurch gekennzeichnet, dass** die Beschichtung eine Grundierung ist, die mindestens einen der folgenden Bestandteile enthält:
- Cellulosefasern,
- Kasein,
- Molke,
- Agar Agar,
- Flohsamenschalen
- SiO₂.

4. Formkörper aus Faserstoff (2"') nach einem der Ansprüche 2 bis 3, **dadurch gekennzeichnet, dass** die Abdeckung (10) mindestens eines der folgenden Merkmale aufweist:
• sie besteht aus einer aus einer Siegelfolie;
• sie ist aus dem gleichen Material gebildet wie das Anschlusselement (11"').

5. Formkörper aus Faserstoff (2"') nach einem der Ansprüche 2 bis 4, **dadurch gekennzeichnet, dass** er eine zweite zumindest lokal ausgebildete biologisch abbaubare Beschichtung aufweist.

6. Formkörper aus Faserstoff (2"') nach Anspruch 5, **dadurch gekennzeichnet, dass** die zweite Beschichtung einen der folgenden Bestandteile enthält:
- Leinöl,
- Carnaubawachs,
- Bienenwachs.

7. Formkörper aus Faserstoff (2"') nach einem der Ansprüche 1 bis 6, **dadurch gekennzeichnet, dass** das Anschlusselement als ein Verstärkungsring (11"') ausgebildet ist.

8. Verfahren zur Herstellung eines Formkörpers aus Faserstoff mit Anschlusselement, **gekennzeichnet durch** die folgenden Schritte:
• Einlegen eines Anschlusselements, welches eine Verbindungswand mit Durchbrüchen aufweist, in eine Saugform, in der der Formkörper aus Faserstoff geformt wird, so dass die Verbindungswand einen geringen Abstand zu einer porösen Wand der Saugform aufweist;
• Absaugen von Faserstoff aus einer Pulpe durch die poröse Wand der Saugform, so dass sich der Faserstoff auf der porösen Wand ablagert und der abgelagerte Faserstoff die Durchbrüche der Verbindungswand durchragt, wobei das Anschlusselement fest in der entstehenden Faserstoffschicht verankert wird.

9. Verfahren nach Anspruch 8, **dadurch gekennzeichnet, dass** der angesaugte Faserstoff gepresst und entwässert wird.

10. Verfahren nach einem der Ansprüche 8 oder 9, **gekennzeichnet durch** mindestens einen der folgenden Schritte:
- Verdichten des Fasermaterials zu einem Behälter;
- Entwässern und Trocknen des Fasermaterials;
- Beschichten des Fasermaterials mit einer Grundierung;
- Spritzgießen des Anschlusselements;
- Anbringen einer Abdeckung.

11. Verfahren nach Anspruch 10, **dadurch gekennzeichnet, dass** der Formkörper mit einer zweiten Beschichtung beschichtet und warmgepresst und abkühlt wird.

12. Verfahren nach einem der Ansprüche 8 bis 11, **dadurch gekennzeichnet, dass** der Formkörper gemeinsam mit dem Anschlusselement beschichtet wird.

## Claims

1. A molded product made of fiber material (2"') with a connection element (11‴),
**characterized in that**
the connection element (11"') has a connecting wall (17) with holes (18) through which the fiber material of the molded product (2"') projects.

2. The molded product made of fiber material (2"') according to claim 1, **characterized in that** it has at least one of the following features:
• the molded product (2"') is a container (2"') having at least one opening (7‴);
• the connecting wall surrounds the opening (7"');
• the container (2"') has a cover for the opening (7‴);
• the container (2"') has a biodegradable or bioinert coating;
• the connection element (11"') is injection molded;
• the connection element (11"') is made of biodegradable material;
• the connection element (11"') reinforces the container (2"') locally, at least in the region of the opening (7"').

3. The molded product made of fiber material (2"') according to claim 2, **characterized in that** the coating is a primer which contains at least one of the following components:
- cellulose fibers,
- casein,
- whey,
- Agar Agar,
- Psyllium husks
- SiO₂

4. The molded product made of fiber material (2"') according to one of claims 2 to 3, **characterized in that** the cover (10) has at least one of the following features:
• it consists of a sealing film;
• it is made of the same material as the connection element (11"').

5. The molded product made of fiber material (2"') according to one of claims 2 to 4, **characterized in that** it has a second, at least locally formed, biodegradable coating.

6. The molded product made of fiber material (2"') according to claim 5, **characterized in that** the second coating contains one of the following components:
- linseed oil,
- carnauba wax,
- beeswax.

7. The molded product made of fiber material (2"') according to one of claims 1 to 6, **characterized in that** the connection element is designed as a reinforcing ring (11"').

8. A method of manufacturing a molded product made of fiber material with a connection element, **characterized by** the following steps:
• insertion of a connection element, which has a connecting wall with holes, into a suction mold in which the molded product is formed from fiber material so that the connecting wall has a small distance to a porous wall of the suction mold;
• suction of fiber material from a pulp through the porous wall of the suction mold, so that the fiber material is deposited on the porous wall and the deposited fiber material protrudes through the holes of the connecting wall, whereby the connection element is firmly anchored in the resulting fiber material layer.

9. The method according to claim 8, **characterized in that** the sucked fiber material in is pressed and dewatered.

10. The method according to any one of claims 8 or 9, **characterized by** at least one of the following steps :
- compacting the fiber material into a container;
- dewatering and drying of the fiber material;
- coating the fiber material with a primer;
- injection molding of the connection element;
- attaching a cover.

11. The method according to claim 10, **characterized in that** the molded product is coated with a second coating and is hot-pressed and cooled.

12. The method according to one of claims 8 to 11, **characterized in that** the molded product is coated together with the connection element.

## Revendications

1. Corps moulé (2"') à base de matière fibreuse, comportant un élément de raccordement (11"'),
**caractérisé en ce que**
l'élément de raccordement (11"') présente une paroi de liaison (17) à ouvertures traversantes (18) qui sont traversées par la matière fibreuse du corps moulé (2‴).

2. Corps moulé (2‴) à base de matière fibreuse selon la revendication 1, **caractérisé en ce qu'**il présente au moins une des caractéristiques suivantes :
• le corps moulé (2"') est un récipient (7‴) présentant au moins une ouverture (2‴) ;
• la paroi de liaison entoure l'ouverture (7"') ;
• le récipient (2"') comporte un couvercle pour l'ouverture (7‴) ;
• le récipient (2‴) comporte un revêtement bioinerte ou biologiquement dégradable ;
• l'élément de raccordement (11"') est moulé par injection ;
• l'élément de raccordement (11"') est constitué de matière biologiquement dégradable ;
• l'élément de raccordement (11"') renforce localement le récipient (2‴) au moins dans la zone de l'ouverture (7‴).

3. Corps moulé (2‴) à base de matière fibreuse selon la revendication 2, **caractérisé en ce que** le revêtement est une couche de fond qui contient au moins un des constituants suivants :
- fibres de cellulose,
- caséine,
- lactosérum,
- agar-agar,
- téguments de psyllium
- SiO2.

4. Corps moulé (2"') à base de matière fibreuse selon l'une quelconque des revendications 2 et 3, **caractérisé en ce que** le couvercle (10) présente au moins une des caractéristiques suivantes :
• il consiste en un film de scellage ;
• il est constitué de la même matière que l'élément de raccordement (11‴).

5. Corps moulé (2"') à base de matière fibreuse selon l'une quelconque des revendications 2 à 4, **caractérisé en ce qu'**il comporte un deuxième revêtement biologiquement dégradable, formé au moins localement.

6. Corps moulé (2‴) à base de matière fibreuse selon la revendication 5, **caractérisé en ce que** le deuxième revêtement contient l'un des constituants suivants :
- huile de lin,
- cire de carnauba,
- cire d'abeille

7. Corps moulé (2"') à base de matière fibreuse selon l'une quelconque des revendications 1 à 6, **caractérisé en ce que** l'élément de raccordement est configuré sous forme d'une bague de renfort (11‴).

8. Procédé pour la production d'un corps moulé à base de matière fibreuse, comportant un élément de raccordement, **caractérisé par** les étapes suivantes :
• introduction d'un élément de raccordement, qui présente une paroi à ouvertures traversantes, dans un moule à aspiration, dans lequel le corps moulé est mis en forme à partir de matière fibreuse, de sorte que la paroi de liaison présente une faible distance par rapport à une paroi poreuse du moule à aspiration ;
• aspiration de la matière fibreuse à partir d'une pâte cellulosique à travers la paroi poreuse du moule à aspiration, de sorte que la matière fibreuse se dépose sur la paroi poreuse et la matière fibreuse déposée traverse les ouvertures traversantes de la paroi de liaison, l'élément de raccordement étant solidement ancré dans la couche de matière fibreuse résultante.

9. Procédé selon la revendication 8, **caractérisé en ce que** la matière fibreuse aspirée est pressée et déshydratée.

10. Procédé selon l'une quelconque des revendications 8 et 9, **caractérisé par** au moins une des étapes suivantes :
- compactage de la matière fibreuse en un récipient ;
- déshydratation et séchage de la matière fibreuse ;
- revêtement de la matière fibreuse avec une couche de fond ;
- moulage par injection de l'élément de raccordement ;
- application d'un couvercle.

11. Procédé selon la revendication 10, **caractérisé en ce que** le corps moulé est revêtu avec un deuxième revêtement et est pressé à chaud et refroidi.

12. Procédé selon l'une quelconque des revendications 8 à 11, **caractérisé en ce que** le corps moulé est revêtu conjointement avec l'élément de raccordement.
